(19) Europäisches Patentamt
European Patent Office
Office européen des brevets

(11) **EP 3 434 086 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **18184962.1**

(22) Anmeldetag: **23.07.2018**

(51) Internationale Patentklassifikation (IPC):
**A01B 59/06** (2006.01)   **A01B 63/111** (2006.01)
**A01C 7/20** (2006.01)   **A01B 59/00** (2006.01)
**A01B 63/102** (2006.01)   **A01B 63/108** (2006.01)

(52) Gemeinsame Patentklassifikation (CPC):
**A01B 59/004; A01B 59/066; A01B 63/1117;**
A01B 63/102; A01B 63/108

(54) **VERFAHREN ZUR AUSRICHTUNG EINES AN EINEM KRAFTHEBER ANGEBAUTEN ARBEITSGERÄTES**

METHOD FOR ALIGNING A TOOL MOUNTED ON A POWER LIFTER

PROCÉDÉ D'ORIENTATION D'UN APPAREIL DE TRAVAIL ASSEMBLÉ SUR UN RELEVAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2017   DE 102017212951**

(43) Veröffentlichungstag der Anmeldung:
**30.01.2019   Patentblatt 2019/05**

(73) Patentinhaber: **Deere & Company**
**Moline, IL 61265 (US)**

(72) Erfinder: **Billich, Manuel**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
EP-A1- 3 289 847   EP-A1- 3 311 639
WO-A1-2016/192973   CN-A- 106 171 086
DE-A1- 10 140 383   DE-A1-102016 209 270
DE-A1-102016 223 189   DE-B3- 10 350 651
GB-A- 2 187 375

**Beschreibung**

Die Erfindung betrifft ein Verfahren zur Ausrichtung eines mittels eines Krafthebers an einem landwirtschaftlichen Nutzfahrzeug angebauten Arbeitsgerätes.

Beim Anbau eines Arbeitsgerätes mittels eines Krafthebers an einem landwirtschaftlichen Nutzfahrzeug ist oftmals eine exakte Ausrichtung des Arbeitsgerätes hinsichtlich einer Arbeitshöhe und eines Neigungswinkels erforderlich, da die Ausrichtung die Arbeitseigenschaften des Arbeitsgerätes beeinflussen kann.

Die Schriften WO 2016/192973 A1, CN 106 171 086 A, EP 3 311 639 A1 und EP 3 289 847 A1 beschreiben bekannte Verfahren zur Einstellung eines Soll-Ausrichtungswinkels eines mittels eines Krafthebers an einem landwirtschaftlichen Nutzfahrzeug angebauten Arbeitsgerätes.

Es ist daher die Aufgabe der vorliegenden Erfindung, eine Ausrichtung für ein angebautes Arbeitsgerät auf technisch einfache Weise zu erreichen.

Diese Aufgabe wird gemäß den Merkmalen des Patentanspruchs 1 gelöst.

Mit diesem Verfahren kann ein gewünschter Soll-Ausrichtungswinkel des Anbaugerätes durch einen Benutzer vorgegeben und durch Erzielen einer entsprechenden Soll-Länge des Oberlenkers automatisch korrekt eingestellt werden. Da bei diesem Verfahren der Unterlenker-Winkel und somit eine Arbeitshöhe des Arbeitsgerätes berücksichtigt wird, kann der eingestellte Soll-Ausrichtungswinkel auch bei wechselnden bzw. unterschiedlichen Arbeitshöhen konstant gehalten werden, indem eine entsprechend angepasste Soll-Länge des Oberlenkers ermittelt wird. Diese ermittelte angepasste Soll-Länge kann automatisch eingestellt oder dem Benutzer zur manuellen Einstellung signalisiert werden.

Daneben sind Anwendungen denkbar, bei denen der Soll-Ausrichtungswinkel eines am Front- bzw. Heckkraftheber angebauten Anbaugerätes zusätzlich unter Berücksichtigung eines gegenüber der Erdhorizontalen auftretenden Steigungswinkels des Nutzfahrzeugs angepasst wird. Dies ist beispielsweise bei Anbaugeräten zur Beförderung von Flüssigkeiten in offenen Behältern von Bedeutung. Treten übermäßige Abweichungen zwischen dem aktuellen Steigungswinkel des Nutzfahrzeugs und einem für das betreffende Anbaugerät einzuhaltenden Soll-Steigungswinkel auf, wird dies durch entsprechende Korrektur des Soll-Ausrichtungswinkels des Anbaugerätes ausgeglichen. Hierzu erfolgt je nach Gefällerichtung eine Erhöhung bzw. Verringerung des Soll-Ausrichtungswinkels entsprechend der Differenz zwischen dem Soll-Steigungswinkel und dem aktuellen Steigungswinkel. Der aktuelle Steigungswinkel wird beispielsweise mittels eines dem Nutzfahrzeug zugeordneten Inklinationssensors erfasst.

Die hierdurch geschaffene technisch einfache Realisierung eines Soll-Ausrichtungswinkels entlastet den Benutzer oder Fahrzeugführer bei der Handhabung des Anbaugerätes, da herkömmliche zeitaufwändige manuelle Tätigkeiten, wie etwa ein Absteigen vom Traktor und eine Sichtprüfung des Anbaugerätes, zur exakten Ausrichtung des Anbaugerätes entfallen. Außerdem werden spezifische Messmittel (z.B. Wasserwaage) zum Einstellen des gewünschten Soll-Ausrichtungswinkels überflüssig.

Das Verfahren ermöglicht es einem Benutzer, einen Soll-Ausrichtungswinkel für das Anbaugerät vorzugeben und mittels einer Soll-Länge des Oberlenkers einzustellen, wobei die Soll-Länge in Abhängigkeit von dem Soll-Ausrichtungswinkel und dem Unterlenker-Winkel ermittelt wird. Durch diese exakte Ausrichtung des Arbeitsgerätes werden dessen Arbeitseigenschaften (z.B. Streueigenschaften bei einem Düngerstreuer) auf technisch einfache Weise verbessert.

Der Unterlenker-Winkel wird vorzugsweise mittels einer Sensorik bzw. eines Sensors ermittelt. Hierbei kann der Unterlenker-Winkel beispielsweise mittels eines Winkelsensors oder eines anderen geeigneten Sensors direkt messtechnisch erfasst werden.

Alternativ kann bei einem Heckkraftheber zunächst ein Hubarm-Winkel messtechnisch (insbesondere mittels eines geeigneten Sensors) erfasst werden, welcher bei einem Betrieb des Hecckrafthebers oftmals ohnehin routinemäßig als Information vorliegt. Der Unterlenker-Winkel kann dann mit geringem Rechenaufwand indirekt und abhängig von dem erfassten Hubarm-Winkel ermittelt werden. Dabei ist der Hubarm-Winkel von einem Hubarm und der Fahrzeug-Horizontalen eingeschlossen, wobei der Hubarm als Bestandteil des Heckkrafthebers mit der Tragstruktur des Nutzfahrzeugs gelenkig verbunden und über ein Hubelement (z.B. einer verstellbaren Hubspindel) mit dem Unterlenker gelenkig verbunden ist.

Vorzugsweise wird die Soll-Länge des Oberlenkers in Abhängigkeit von einer Masthöhe des Anbaugerätes und/oder einer Länge des Unterlenkers ermittelt, wobei die Länge des Unterlenkers als ein Abstand zwischen seiner Anlenkstelle an der Tragstruktur des Nutzfahrzeugs und seiner Kopplungsstelle an dem Anbaugerät definiert ist. Diese Daten bzw. Informationen können technisch einfach und exakt zur Verfügung gestellt werden, da die Masthöhe und die Länge des Unterlenkers geometrisch eindeutig definiert sind.

Vorzugsweise wird die Soll-Länge des Oberlenkers in Abhängigkeit von mindestens einem der folgenden Merkmale ermittelt:

- einer Koordinate der Anlenkstelle des Unterlenkers bezüglich eines Nullpunkts eines definierten Koordinatensystems am Nutzfahrzeug,

- einer Koordinate der Anlenkstelle des Oberlenkers bezüglich eines Nullpunkts eines definierten Koordinatensystems am Nutzfahrzeug.

Hierbei wird insbesondere ein Koordinatensystem genutzt, welches ohnehin bereits für eine herkömmliche Ermittlung von Koordinaten am Nutzfahrzeug zur Verfügung gestellt wird. Bei diesem Koordinatensystem ist beispielsweise eine x-Achse parallel zu einer Längsrichtung (parallel zur Fahrtrichtung) bzw. einer Fahrzeug-Horizontalen des Nutzfahrzeugs ausgerichtet und eine y-Achse parallel zu einer Hochrichtung bzw. einer Fahrzeug-Vertikalen des Nutzfahrzeugs ausgerichtet, wobei sich die x-Achse und die y-Achse in einem definierten Nullpunkt des Koordinatensystems schneiden. Hierdurch lassen sich beispielsweise eine x-Koordinate und/oder eine y-Koordinate der vorgenannten Anlenkstellen mathematisch einfach ermitteln und für die Ermittlung bzw. Berechnung der Soll-Länge des Oberlenkers technisch einfach heranziehen.

In einer bevorzugten Ausführungsform ist der Soll-Ausrichtungswinkel von der Fahrzeug-Horizontalen und einer Bezugsgeraden des Anbaugerätes eingeschlossen. Dabei ist die Bezugsgerade insbesondere eine gedachte Verlängerung einer Masthöhe des Anbaugerätes. Mit anderen Worten ist diese Bezugsgerade - in einer rechtwinklig zur Längsrichtung und rechtwinklig zur Hochrichtung des Nutzfahrzeugs ausgerichteten Querrichtung betrachtet - durch eine Verbindungslinie zwischen den Kopplungsstellen des Oberlenkers und eines Unterlenkers am Anbaugerät gebildet.

Vorzugsweise wird die Soll-Länge des Oberlenkers mittels eines Aktors eingestellt, so dass die Soll-Länge jederzeit automatisch angepasst werden kann. In diesem Zusammenhang handelt es sich insbesondere um einen hydraulischen Oberlenker, dessen Länge mittels einer hydraulischen Steuerung verändert werden kann. Hierbei wird die Einstellung der Soll-Länge des Oberlenkers vorzugsweise mittels einer Längensensorik im oder am Oberlenker unterstützt.

Im Falle eines mechanischen Oberlenkers kann die Ermittlung der Soll-Länge des Oberlenkers als Assistenzsystem dienen, um einem Benutzer die notwendige Soll-Länge zu signalisieren, welche dann von ihm manuell eingestellt werden kann.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    eine schematische Seitenansicht eines frontseitig an einem Nutzfahrzeug mittels eines Frontkrafthebers angebauten Arbeitsgerätes, und

Fig. 2    eine schematische Seitenansicht eines heckseitig an einem Nutzfahrzeug mittels eines Heckkrafthebers angebauten Arbeitsgerätes.

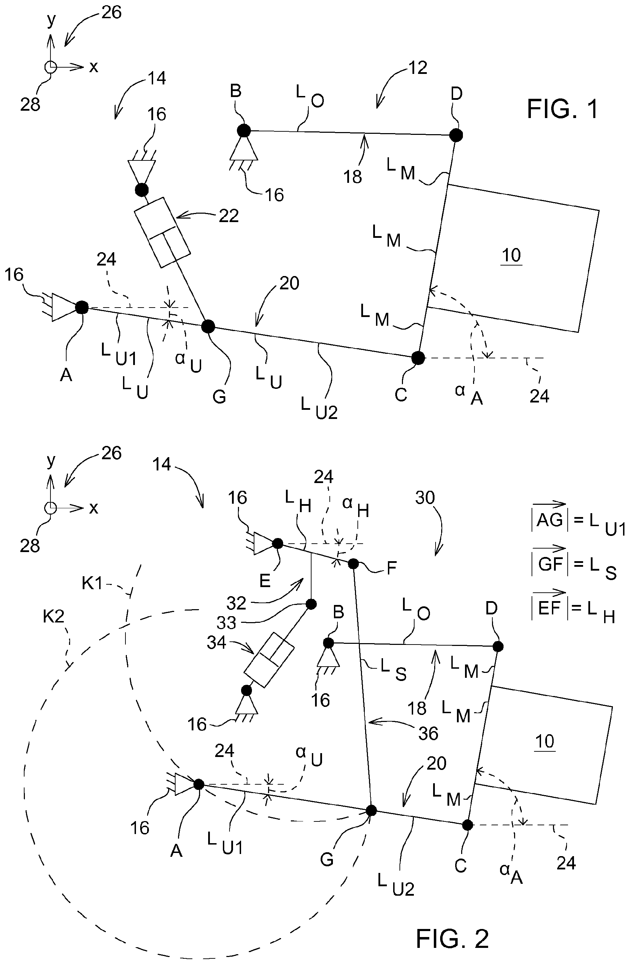

Fig. 1 zeigt schematisch ein Anbaugerät 10, welches mittels eines Frontkrafthebers 12 an einem landwirtschaftlichen Nutzfahrzeug 14, insbesondere einem Traktor, angebaut ist. Hierbei ist der Frontkraftheber 12 an einer Tragstruktur 16 des Nutzfahrzeugs 14 angelenkt. Das Nutzfahrzeug 14 ist der einfachen Darstellung halber lediglich durch die Tragstruktur 16 angedeutet. Der Frontkraftheber 12 weist in üblicher Weise einen Oberlenker 18 und zwei parallele Unterlenker 20 auf. Der Oberlenker 18 ist über eine Anlenkstelle B mit der Tragstruktur 16 und über eine Kopplungsstelle D mit dem Anbaugerät 10 gelenkig verbunden. Jeder Unterlenker 20 ist über eine weitere Anlenkstelle A mit der Tragstruktur 16 und über eine weitere Kopplungsstelle C mit dem Anbaugerät 10 gelenkig verbunden.

In Fig. 1 ergibt sich die Gesamtlänge $L_U$ des Unterlenkers 20 als die Summe der beiden Teillängen $L_{U1}$ und $L_{U2}$. Die Teillänge $L_{U1}$ erstreckt sich von der Anlenkstelle A bis zu einer Lenker-Verbindungsstelle G des Unterlenkers 20, während sich die Teillänge $L_{U2}$ von der Lenker-Verbindungsstelle G bis zu der Kopplungsstelle C erstreckt. Mit der Lenker-Verbindungsstelle G ist ein Wirkende eines Hubzylinders 22 verbunden, während ein zweites Wirkende des Hubzylinders 22 mit der Tragstruktur 16 verbunden ist.

Ein gewünschter Soll-Ausrichtungswinkel $\alpha_A$ ist von einer Fahrzeug-Horizontalen 24 und einer Bezugsgeraden des Anbaugerätes 10 eingeschlossen, wobei die Bezugsgerade eine gedachte Verlängerung einer Masthöhe $L_M$ des Anbaugerätes 10 ist. In Zeichenblattebene betrachtet bildet diese Bezugsgerade eine Verbindung zwischen den beiden Kopplungsstellen C und D am Anbaugerät 10.

Ein Unterlenker-Winkel au ist von dem Unterlenker 20 und der Fahrzeug-Horizontalen 24 eingeschlossen.

Zur mathematisch-geometrischen Ermittlung einzelner Stellen am Kraftheber 12 ist ein fahrzeugfestes Koordinatensystem 26 definiert, dessen x-Achse parallel zu einer Längsrichtung oder Fahrtrichtung des Nutzfahrzeugs 14 ausgerichtet ist und dessen y-Achse parallel zu einer Hochrichtung des Nutzfahrzeugs 14 ausgerichtet ist. Das Koordinatensystem 26 ist lediglich schematisch mit einem Nullpunkt 28 angedeutet, welcher einer geeigneten Position am Nutzfahrzeug 14 entspricht.

In Fig. 2 sind hinsichtlich ihrer Funktion mit Fig. 1 übereinstimmende bzw. vergleichbare Bauteile mit denselben Bezugszeichen gekennzeichnet und deshalb bezüglich Fig. 2 nicht nochmals erläutert. Fig. 2 zeigt schematisch ein Anbaugerät 10, welches mittels eines Heckkrafthebers 30 an dem landwirtschaftlichen Nutzfahrzeug 14 angebaut ist. Hierbei ist der Heckkraftheber 30 an der Tragstruktur 16 des Nutzfahrzeugs 14 angelenkt.

Der Heckkraftheber 30 weist einen Hubarm 32 mit einer Armlänge $L_H$ und drei Anlenkpunkten auf. Mit einem ersten Anlenkpunkt E ist der Hubarm 32 an der Tragstruktur 16 angelenkt. Ein zweiter Anlenkpunkt 33 des Hubarmes 32 ist mit einem Wirkende einer Hubzylinder-Einheit 34 verbunden, deren zweites Wirkende an der Tragstruktur 16 angelenkt ist. Ein dritter Anlenkpunkt F des Hubarmes 32 ist mit einem Hubelement in Form einer längenverstellbaren Hubspindel 36 gelenkig verbunden. Die Hubspindel 36 mit einer veränderbaren Spindellänge Ls ist mit einem dem Anlenkpunkt F abgewandten Wirkende mit der Lenker-Verbindungsstelle G des Unterlenkers 20 gelenkig verbunden. Ein Hubarm-Winkel $\alpha_H$ ist von der Armlänge $L_H$ des Hubarmes 32 und der Fahrzeug-Horizontalen 24 eingeschlossen.

Bei dem Verfahren zur Ausrichtung des Anbaugerätes 10 relativ zur Fahrzeug-Horizontalen 24 oder relativ zu einer parallel zur y-Achse verlaufenden Fahrzeug-Vertikalen wird von einem Benutzer ein gewünschter Ausrichtungswinkel $\alpha_A$ vorgegeben. Dieser gewünschte Ausrichtungswinkel $\alpha_A$ soll eingestellt werden, so dass es sich um einen Soll-Ausrichtungswinkel $\alpha_A$ handelt. Dieser Soll-Ausrichtungswinkel $\alpha_A$ wird über einen noch zu beschreibenden Algorithmus in Abhängigkeit des Unterlenker-Winkels au in die notwendige Soll-Länge $L_O$ des Oberlenkers 18 umgerechnet. Diese berechnete Soll-Länge $L_O$ kann dann über einen Aktor am Nutzfahrzeug 14 (beispielsweise im Falle eines hydraulischen Oberlenkers 18) automatisch eingestellt werden. Im Falle eines mechanischen Oberlenkers 18 kann der Algorithmus als ein Assistenzsystem dienen, um einem Benutzer die notwendige Soll-Länge $L_O$ mitzuteilen, welche dann manuell vom Benutzer eingestellt werden kann.

Die Soll-Länge $L_O$ des Oberlenkers 18 wird mathematisch-geometrisch als Strecke BD berechnet. Dabei sind die x-Koordinate $B_x$ und die y-Koordinate $B_y$ der Anlenkstelle B als feste Koordinaten bezüglich des Koordinatensystems 26 und der Geometrie des Nutzfahrzeugs 14 bekannt. Es müssen deshalb noch die x-Koordinate $D_x$ und die y-Koordinate $D_y$ der Kopplungsstelle D ermittelt werden:

$$D_x = A_x + \cos(\alpha_U) \cdot L_U + \cos(\alpha_A) \cdot L_M \ , \qquad (1)$$

$$D_y = A_y + \sin(\alpha_U) \cdot L_U + \sin(\alpha_A) \cdot L_M \ . \qquad (2)$$

In skalarer Beschreibung gilt für die Soll-Länge $L_O$ gemäß folgender Gleichung (3):

$$L_O = \sqrt{(A_x + \cos(\alpha_U)L_U + \cos(\alpha_A)L_M - B_x)^2 + (A_y + \sin(\alpha_U)L_U + \sin(\alpha_A)L_M - B_y)^2} \ .$$

Innerhalb dieser Gleichung (3) sind die x-Koordinate $B_x$ und die y-Koordinate $B_y$ der Anlenkstelle B, wie bereits erläutert, bekannt. Dasselbe gilt für die x-Koordinate $A_x$ und die y-Koordinate $A_y$ der Anlenkstelle A. Sofern das Nutzfahrzeug 14 mehrere Anlenkstellen B zur Verfügung stellt, muss dem Algorithmus die Anordnung des Oberlenkers 18 bezüglich der aktuell verwendeten Anlenkstelle B mitgeteilt werden, z.B. durch den Benutzer über eine Eingabe-Schnittstelle.

Die Länge $L_U$ ist aufgrund der Geometrie des Unterlenkers 20 bekannt. Die Masthöhe $L_M$ ist eindeutig definiert bzw. bekannt. Der Soll-Ausrichtungswinkel $\alpha_A$ wird, wie bereits erläutert, vom Benutzer vorgegeben.

Somit muss für die Berechnung der Soll-Länge $L_O$ des Oberlenkers 18 gemäß Gleichung (3) nur noch der Unterlenker-Winkel au ermittelt werden. Der Unterlenker-Winkel au kann messtechnisch mittels einer entsprechenden Sensorik erfasst werden. Im Falle eines Heckkrafthebers 30 kann der Unterlenker-Winkel au auch ermittelt werden, indem zunächst der Hubarm-Winkel $\alpha_H$ messtechnisch mittels einer geeigneten Sensorik erfasst wird und der Unterlenker-Winkel au dann in Abhängigkeit von dem erfassten Hubarm-Winkel $\alpha_H$ berechnet wird. Alternativ kann der Unterlenker-Winkel au ermittelt werden, indem zunächst die Länge des Hubzylinders 34 messtechnisch mittels einer geeigneten Sensorik erfasst und der Unterlenker-Winkel au anschließend in Abhängigkeit von der erfassten Länge des Hubzylinders 34 berechnet wird.

Gemäß Fig. 2 gilt für den Unterlenker-Winkel au:

$$\alpha_U = \arctan((G_y - A_y) / (G_x - A_x)) \ . \qquad (4)$$

Dabei sind die x-Koordinate $A_x$ und die y-Koordinate $A_y$ der Anlenkstelle A als feste Koordinaten bezüglich des Koordinatensystems 26 und der Geometrie des Nutzfahrzeugs 14 bekannt. Für die Ermittlung der x-Koordinate $G_x$ und der y-Koordinate $G_y$ der Lenker-Verbindungsstelle G des Unterlenkers 20 können folgende Überlegungen angestellt werden:
Der Punkt G berechnet sich als Schnittpunkt der Kreise K1 und K2. Bezüglich K1 gilt:

$$(x - F_x)^2 + (y - F_y)^2 = L_S^2 . \tag{5}$$

Bezüglich K2 gilt:

$$(x - A_x)^2 + (y - A_y)^2 = L_{U1}^2 . \tag{6}$$

Dabei ist $F_x$ die x-Koordinate und $F_y$ die y-Koordinate des dritten Anlenkpunktes F des Hubarmes 32. Für $F_x$ und $F_y$ gilt:

$$F_x = E_x + \cos(\alpha_H) \cdot L_H , \tag{7}$$

$$F_y = E_y + \sin(\alpha_H) \cdot L_H . \tag{8}$$

Für den Schnittpunkt der Kreise K1 und K2 über der Chordale c = K1 - K2 gilt:

$$G_x = (-c - b \cdot G_y) / a , \tag{9}$$

wobei

$$a = -2F_x + 2A_x ,$$

$$b = -2F_y + 2A_y ,$$

$$c = F_y^2 - A_y^2 + F_x^2 - A_x^2 + L_{U1}^2 - L_S^2 .$$

Es ergeben sich rechnerisch zwei Schnittpunkte:

$$G_{y1,2} = (-b_1 \pm (b_1^2 - 4a_1c_1)^{1/2}) / 2a_1 , \tag{10}$$

wobei

$$a_1 = 1 + (b/a)^2 ,$$

$$b_1 = (2cb/a^2) + (2bF_x/a) - 2F_y ,$$

$$c_1 = (c/a)^2 + (2cF_x/a) + F_x^2 + F_y^2 - L_S^2 .$$

Aus Gleichung (10) ergibt sich des Weiteren
$a_1 > 0$ ,

$$G_{y1,2} \in IR \rightarrow (b_1^2 - 4a_1c_1)^{1/2} \geq 0 \rightarrow b_1^2 - 4a_1c_1 \geq 0 ,$$

$$b_1 < 0 \; ,$$

womit sich der gesuchte Schnittpunkt gemäß

$$G_y = (-b_1 - (b_1{}^2 - 4a_1c_1)^{1/2}) \; / \; 2a_1 \qquad\qquad (11)$$

ermitteln lässt.

Aufgrund der vorgenannten Überlegungen können die x-Koordinate $G_x$ gemäß Gleichung (9) und die y-Koordinate $G_y$ gemäß Gleichung (11) mit Hilfe bekannter Größen berechnet werden. Der Hubarm-Winkel $\alpha_H$ wird messtechnisch erfasst. Die x-Koordinate $E_x$ und die y-Koordinate $E_y$ der Anlenkstelle E sind als feste Koordinaten bezüglich des Koordinatensystems 26 und der Geometrie des Nutzfahrzeugs 14 bekannt. Die Armlänge $L_H$ ist durch die Geometrie des Hubarmes 32 bekannt. Die Teillänge $L_{U1}$ ist entweder eindeutig durch die Geometrie des Unterlenkers 20 bestimmt oder kann durch den Benutzer verändert werden. Die Spindellänge Ls kann durch den Benutzer verändert werden. Diese beiden letztgenannten veränderbaren Größen können dem Algorithmus mitgeteilt werden, z.B. durch den Benutzer über eine Eingabe-Schnittstelle in Gestalt eines berührungsempfindlichen Bildschirms.

Gemäß des erfinderischen Verfahrens zur Ausrichtung des am Front- bzw. Heckkraftheber 12, 30 angebauten Anbaugerätes 10 wird der Soll-Ausrichtungswinkel $\alpha_A$ des Anbaugerätes 10 bezogen auf einen gegenüber der Erdhorizontalen auftretenden Steigungswinkel $\alpha_S$ des Nutzfahrzeugs 14 angepasst. Treten übermäßige Abweichungen zwischen dem aktuellen Steigungswinkel $\alpha_S$ des Nutzfahrzeugs 14 und einem für das betreffende Anbaugerät 10 einzuhaltenden Soll-Steigungswinkel $\alpha_S^{Ref}$ auf, wird dies durch entsprechende Korrektur des Soll-Ausrichtungswinkels $\alpha_A$ des Anbaugerätes 10 ausgeglichen. Hierzu erfolgt je nach Gefällerichtung eine Erhöhung bzw. Verringerung des Soll-Ausrichtungswinkels $\alpha_A$ entsprechend der Differenz zwischen dem Soll-Steigungswinkel $\alpha_S^{Ref}$ und dem aktuellen Steigungswinkel $\alpha_S$, genauer gesagt für den Frontkraftheber 12 entsprechend

$$\alpha_A \;\rightarrow\; \alpha_A - (\alpha_S - \alpha_S^{Ref})$$

und den Heckkraftheber 30 entsprechend

$$\alpha_A \;\rightarrow\; \alpha_A + (\alpha_S - \alpha_S^{Ref}) \;.$$

Dies ist beispielsweise bei Anbaugeräten zur Beförderung von Flüssigkeiten in offenen Behältern von Bedeutung. Der aktuelle Steigungswinkel $\alpha_S$ wird hierbei mittels eines dem Nutzfahrzeug 14 zugeordneten Inklinationssensors erfasst.

## Patentansprüche

1. Verfahren zur Einstellung eines Soll-Ausrichtungswinkels $\alpha_A$ eines mittels eines Krafthebers (12, 30) an einem landwirtschaftlichen Nutzfahrzeug (14) angebauten Arbeitsgerätes (10), wobei

- der Kraftheber (12, 30) einen an einer Tragstruktur (16) des Nutzfahrzeugs (14) angelenkten Oberlenker (18) und mindestens einen an der Tragstruktur (16) des Nutzfahrzeugs (14) angelenkten Unterlenker (20) aufweist,
- der Oberlenker (18) mit einer Anlenkstelle (B) der Tragstruktur (16) und mit einer Kopplungsstelle (D) des Anbaugerätes (10) verbunden ist,
- der Unterlenker (20) mit einer weiteren Anlenkstelle (A) der Tragstruktur (16) und mit einer weiteren Kopplungsstelle (C) des Anbaugerätes (10) verbunden ist,
- der Soll-Ausrichtungswinkel $\alpha_A$ mittels einer Soll-Länge $L_O$ des Oberlenkers (18) eingestellt wird, und
- die Soll-Länge $L_O$ des Oberlenkers (18) in Abhängigkeit von dem Soll-Ausrichtungswinkel $\alpha_A$ und in Abhängigkeit von einem Unterlenker-Winkel $\alpha_U$ ermittelt wird, wobei der Unterlenker-Winkel $\alpha_U$ von dem Unterlenker (20) und einer Fahrzeug-Horizontalen (24) eingeschlossen ist, **dadurch gekennzeichnet, dass** der Soll-Ausrichtungswinkel $\alpha_A$ des Anbaugerätes (10) bezogen auf einen gegenüber der Erdhorizontalen auftretenden Steigungswinkel $\alpha_S$ des Nutzfahrzeugs (14) je nach Gefällerichtung durch Erhöhung bzw. Verringerung des Soll-Ausrichtungswinkels $\alpha_A$ entsprechend der Differenz zwischen einem einzuhaltenden Soll-Steigungswinkel $\alpha_S^{Ref}$ und dem aktuellen Steigungswinkel $\alpha_S$ für einen Frontkraftheber (12) entsprechend $\alpha_A \rightarrow \alpha_A - (\alpha_S - \alpha_S^{Ref})$ und für einen Heckkraftheber (30) entsprechend $\alpha_A \rightarrow \alpha_A + (\alpha_S - \alpha_S^{Ref})$ angepasst wird.

2. Verfahren nach Anspruch 1, **dadurch gekennzeichnet, dass** der Unterlenker-Winkel $\alpha_U$ mittels einer Sensorik ermittelt wird.

3. Verfahren nach Anspruch 1 oder 2, **dadurch gekennzeichnet, dass** der Unterlenker-Winkel $\alpha_U$ in Abhängigkeit von einem Hubarm-Winkel $\alpha_H$ ermittelt wird, welcher von einem Hubarm (32) und der Fahrzeug-Horizontalen (24) eingeschlossen ist, wobei der Hubarm (32) als Bestandteil eines Heckkrafthebers (30) mit der Tragstruktur (16) des Nutzfahrzeugs (14) gelenkig verbunden und über ein Hubelement (36) mit dem Unterlenker (20) gelenkig verbunden ist.

4. Verfahren nach einem der vorhergehenden Ansprüche, **dadurch gekennzeichnet, dass** die Soll-Länge $L_O$ des Oberlenkers (18) in Abhängigkeit von mindestens einem der folgenden Merkmale ermittelt wird:

   - der Masthöhe ($\overline{L}_M$) des Anbaugerätes (10),
   - der Länge ($\overline{L}_U$) des Unterlenkers (20) zwischen seiner Anlenkstelle (A) an der Tragstruktur des Nutzfahrzeugs (14) und seiner Kopplungsstelle (C) an dem Anbaugerät (10) .

5. Verfahren nach einem der vorhergehenden Ansprüche, **dadurch gekennzeichnet, dass** die Soll-Länge $L_O$ des Oberlenkers (18) in Abhängigkeit von mindestens einem der folgenden Merkmale ermittelt wird:

   - einer Koordinate ($A_x$, $A_y$) der Anlenkstelle (A) des Unterlenkers (20) bezüglich eines Nullpunkts (28) eines definierten Koordinatensystems (26) am Nutzfahrzeug (14),
   - einer Koordinate ($B_x$, $B_y$) der Anlenkstelle (B) des Oberlenkers (18) bezüglich eines Nullpunkts (28) eines definierten Koordinatensystems (26) am Nutzfahrzeug (14) .

6. Verfahren nach einem der vorhergehenden Ansprüche, **dadurch gekennzeichnet, dass** der Soll-Ausrichtungswinkel $\alpha_A$ von der Fahrzeug-Horizontalen (24) und einer Bezugsgeraden $L_M$ des Anbaugerätes (10) eingeschlossen ist.

7. Verfahren nach Anspruch 6, **dadurch gekennzeichnet, dass** die Bezugsgerade des Anbauaerätes (10) eine gedachte Verlängerung der Masthöhe ($L_M$) des Anbaugerätes (10) ist.

8. Verfahren nach einem der vorhergehenden Ansprüche, **dadurch gekennzeichnet, dass** die Soll-Länge $L_O$ des Oberlenkers (18) mittels eines Aktors eingestellt wird.

**Claims**

1. Method for setting a setpoint angle of alignment $\alpha_A$ of an implement (10) attached to an agricultural utility vehicle (14) by means of a power lift (12, 30), wherein

   - the power lift (12, 13) has an upper link (18), articulated on a supporting structure (16) of the utility vehicle (14), and at least one lower link (20), articulated on the supporting structure (16) of the utility vehicle (14),
   - the upper link (18) is connected to a point of articulation (B) of the supporting structure (16) and to a coupling point (D) of the attachment (10),
   - the lower link (20) is connected to a further point of articulation (A) of the supporting structure (16) and to a further coupling point (C) of the attachment (10),
   - the setpoint angle of alignment $\alpha_A$ is set by means of a setpoint length $L_O$ of the upper link (18), and

- the setpoint length $L_O$ of the upper link (18) is determined in dependence on the setpoint angle of alignment $\alpha_A$ and in dependence on a lower-link angle $\alpha_U$, wherein the lower-link angle $\alpha_U$ is enclosed by the lower link (20) and a vehicle horizontal (24), **characterized in that** the setpoint angle of alignment $\alpha_A$ of the attachment (10) is adapted with reference to a slope angle $\alpha_S$ of the utility vehicle (14), with respect to the Earth's horizontal by increasing or reducing the setpoint angle of alignment $\alpha_A$, depending on the direction of the gradient, in accordance with the difference between a setpoint slope angle $\alpha_S^{Ref}$ to be maintained and the current slope angle $\alpha_S$ for a front power lift (12) in accordance with $\alpha_A \rightarrow \alpha_A + (\alpha_S - \alpha_S^{Ref})$ and for a rear power lift (30) in accordance with $\alpha_A \rightarrow \alpha_A + (\alpha_S - \alpha_S^{Ref})$

2. Method according to Claim 1, **characterized in that** the lower-link angle $\alpha_U$ is determined by means of a sensor system.

3. Method according to Claim 1 or 2, **characterized in that** the lower-link angle $\alpha_U$ is determined in dependence on a lifting-arm angle $\alpha_H$, which is enclosed by a lifting arm (32) and the vehicle horizontal (24), wherein the lifting arm (32), as a component part of a rear power lift (30), is connected in an articulated manner to the supporting structure (16) of the utility vehicle (14) and is connected in articulated manner by way of a lifting element (36) to the lower link (20).

4. Method according to one of the preceding claims, **characterized in that** the setpoint length $L_O$ of the upper link (18) is determined in dependence on at least one of the following features:

   - the mast height ($\overline{L}_M$) of the attachment (10),
   - the length ($\overline{L}_U$) of the lower link (20) between its point of articulation (A) on the supporting structure of the utility vehicle (14) and its coupling point (C) on the attachment (10).

5. Method according to one of the preceding claims, **characterized in that** the setpoint length $L_O$ of the upper link (18) is determined in dependence on at least one of the following features:

   - a coordinate ($A_x$, $A_y$) of the point of articulation (A) of the lower link (20) with respect to a zero point (28) of a defined coordinate system (26) on the utility vehicle (14),
   - a coordinate ($B_x$, $B_y$) of the point of articulation (B) of the upper link (18) with respect to a zero point (28) of a defined coordinate system (26) on the utility vehicle (14) .

6. Method according to one of the preceding claims, **characterized in that** the setpoint angle of alignment $\alpha_A$ is enclosed by the vehicle horizontal (24) and a reference line $L_M$ of the attachment (10).

7. Method according to Claim 6, **characterized in that** the reference line of the attachment (10) is an imaginary extension of the mast height ($L_M$) of the attachment (10).

8. Method according to one of the preceding claims, **characterized in that** the setpoint length $L_O$ of the upper link (18) is set by means of an actuator.


**Revendications**

1. Procédé de réglage d'un angle d'orientation de consigne $\alpha_A$ d'un outil de travail (10) monté sur un véhicule utilitaire agricole (14) au moyen d'un relevage (12, 30),

   - le relevage (12, 30) présentant un bras supérieur (18) articulé sur une structure porteuse (16) du véhicule utilitaire (14) et au moins un bras inférieur (20) articulé sur la structure porteuse (16) du véhicule utilitaire (14),
   - le bras supérieur (18) étant relié à un point d'articulation (B) de la structure porteuse (16) et à un point d'accouplement (D) de l'outil porté (10),
   - le bras inférieur (20) étant relié à un autre point d'articulation (A) de la structure porteuse (16) et à un autre point d'accouplement (C) de l'outil porté (10),
- l'angle d'orientation de consigne $\alpha_A$ étant réglé au moyen d'une longueur de consigne $L_O$ du bras supérieur (18), et
- la longueur de consigne $L_O$ du bras supérieur (18) étant déterminée en fonction de l'angle d'orientation de consigne $\alpha_A$ et en fonction d'un angle de bras inférieur $\alpha_U$, l'angle de bras inférieur $\alpha_U$ étant formé par le bras inférieur (20) et une direction horizontale du véhicule (24), **caractérisé en ce que** l'angle d'orientation de consigne $\alpha_A$ de l'outil porté (10) est adapté par rapport à un angle d'inclinaison $\alpha_s$, se produisant par rapport à la direction horizontale du sol, du véhicule utilitaire (14) en fonction de la direction de pente par augmentation ou réduction de l'angle d'orientation de consigne $\alpha_A$ de manière correspondante à la différence entre un angle d'inclinaison de consigne $\alpha_s^{Ref}$ devant être maintenu et l'angle d'inclinaison $\alpha_s$ actuel, de manière correspondante à $\alpha_A \rightarrow \alpha_A - (\alpha_s - \alpha_s^{Ref})$ pour un relevage avant (12) et de manière correspondante à $\alpha_A \rightarrow \alpha_A + (\alpha_s - \alpha_s^{Ref})$ pour un relevage arrière (30).

2. Procédé selon la revendication 1, **caractérisé en ce que** l'angle de bras inférieur $\alpha_u$ est déterminé au moyen d'un système de capteurs.

3. Procédé selon la revendication 1 ou 2, **caractérisé en ce que** l'angle de bras inférieur $\alpha_U$ est déterminé en fonction d'un angle de bras de levage $\alpha_H$, lequel est formé par un bras de levage (32) et la direction horizontale du véhicule (24), le bras de levage (32) étant, en tant que composant d'un relevage arrière (30), relié de manière articulée à la structure porteuse (16) du véhicule utilitaire (14) et étant relié de manière articulée au bras inférieur (20) par le biais d'un élément de levage (36).

4. Procédé selon l'une des revendications précédentes, **caractérisé en ce que** la longueur de consigne $L_O$ du bras supérieur (18) est déterminée en fonction d'au moins l'une des caractéristiques suivantes :

   - la hauteur de mât ($L_M$) de l'outil porté (10),
   - la longueur ($L_U$) du bras inférieur (20) entre son point d'articulation (A) sur la structure porteuse du véhicule utilitaire (14) et son point d'accouplement (C) sur l'outil porté (10).

5. Procédé selon l'une des revendications précédentes, **caractérisé en ce que** la longueur de consigne $L_O$ du bras supérieur (18) est déterminée en fonction d'au moins l'une des caractéristiques suivantes :

   - une coordonnée ($A_x$, $A_y$) du point d'articulation (A) du bras inférieur (20) par rapport à un point origine (28) d'un système de coordonnées (26) défini au niveau du véhicule utilitaire (14),
   - une coordonnée ($B_x$, $B_y$) du point d'articulation (B) du bras supérieur (18) par rapport à un point origine (28) d'un système de coordonnées (26) défini au niveau du véhicule utilitaire (14).

6. Procédé selon l'une des revendications précédentes, **caractérisé en ce que** l'angle d'orientation de consigne $\alpha_A$ est formé par la direction horizontale du véhicule (24) et une droite de référence $L_M$ de l'outil porté (10).

7. Procédé selon la revendication 6, **caractérisé en ce que** la droite de référence de l'outil porté (10) est un prolongement imaginaire de la hauteur de mât ($L_M$) de l'outil porté (10).

8. Procédé selon l'une des revendications précédentes, **caractérisé en ce que** la longueur de consigne $L_O$ du bras supérieur (18) est réglée au moyen d'un actionneur.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016192973 A1
- CN 106171086 A
- EP 3311639 A1
- EP 3289847 A1